Europäisches Patentamt

European Patent Office

Office européen des brevets

(19)

(11) **EP 0 631 109 B1**

(12) **EUROPEAN PATENT SPECIFICATION**

(45) Date of publication and mention
of the grant of the patent:
**28.02.2001 Bulletin 2001/09**

(51) Int Cl.[7]: **G01C 1/00**, G01C 21/00

(21) Application number: **94107119.3**

(22) Date of filing: **06.05.1994**

(54) **Passive image sensor navigation system**

Navigationssystem mit passivem Bildsensor

Système de navigation à capteur d'images passif

(84) Designated Contracting States:
**DE FR GB**

(30) Priority: **03.06.1993 IT RM930368**

(43) Date of publication of application:
**28.12.1994 Bulletin 1994/52**

(73) Proprietor: **Alenia Marconi Systems S.p.A.**
**00131 Roma (IT)**

(72) Inventor: **Caplan, William D.**
**NL-2593 AK Den Haag (NL)**

(74) Representative: **Gustorf, Gerhard, Dipl.-Ing.**
**Patentanwalt,**
**Bachstrasse 6 A**
**84036 Landshut (DE)**

(56) References cited:
**EP-A- 0 436 213**          **DE-A- 3 047 016**
**GB-A- 2 212 687**          **US-A- 4 695 959**

• **Proceedings of the 12th Canadian Symposium on Remote Sensing IGARSS 89, Remote Sensing: An Economic Tool for the Nineties 10-14 July 1989, Vancouver, Canada, Vol.3. pp. 1264-1267, S.NEGAHDARIPOUR: "Passive Navigation in a Planar World"**
• **JOURNAL OF THE OPTICAL SOCIETY OF AMERICA - A, vol.3, no.9, September 1986, NEW YORK US pages 1512 - 1517 H.ZINNER 'Determining the kinematic parameters of a moving imaging sensor by processing spatial and temporal intensity changes'**

## Description

The invention relates to a system of navigation for use in a mobile vehicle as set forth in the preamble of claim 1.

Such a system is described in Proceedings of the 12th Canadian Symposium on Remote Sensing IGARSS 89, Remote Sensing: "An Economic Tool for the Nineties", by S. Negahdaripour, July 10 - 14, 1989, Vancouver, Canada, Vol. 3, pp. 1264 - 1266. In this article, monocular motion stereo navigation schemes are described which are based on optical flow determination.

EP-A 436 213 concerns a system incorporating inertial sensor information into optical flow computations to detect obstacles and to provide alternative navigational paths free from obstacles. This known system is a maximally passive obstacle detection system that makes selective use of an active sensor.

GB-A 2 212 687 relates to an aircraft navigation system that uses an infra-red scanner to provide an image of the ground, and a laser doppler system to measure the speed of the aircraft relative to the ground.

The present invention, the most essential features of which are described in claim 1, pertains to aircraft guidance systems for mobile vehicles, primarily aircraft, that utilize image data available from onboard image sensors. Many aircraft applications involve the use of a passive imaging sensor in order to accomplish the mission objectives. In addition to providing image data that pertains to the primary use of the imager, the fact that the imager is carried onboard can be exploited to aid in navigating the aircraft. Generally aircraft navigation requires an inertial navigation system (INS) in order to determine its position with respect to some inertial reference frame. INS systems are extremely costly due to their mechanical and electronic complexity, and they impose a payload penalty on the aircraft in terms of size, weight, and power.

The presence onboard of an imaging sensor provides image data that can be processed to derive information about the aircraft attitude and velocity, which can be further processed to derive the aircraft position in a defined reference frame.

According to the invention, there is provided a system of navigation that derives the velocity vector without the use of an INS. The system uses the motion of the scene viewed by the imager in the imager's field of view (FOV) in order to calculate the aircraft velocity. The motion of the image points in the FOV due to the motion of the aircraft is referred to as the optical flow. It is well known that the optical flow from a single imager can provide the velocity components only to within a global scale factor. Accordingly, there is provided input data from a second sensor that enables calculation of the scale factor such that the velocity magnitude and direction is known on an absolute scale. This second sensor may also be part of the typical aircraft sensor suite, for example but not limited to such things as altimeter, airspeed indicator, engine throttle readout, engine thrust readout, autopilot accelerometers and gyroscopes, or any other sensor that provides data that can be used to estimate any component of the aircraft velocity.

It is therefore the object of this invention to provide a navigation system for aircraft using the optical flow from an imager on board the aircraft.

A further object of the present invention is to provide a navigation system for aircraft that have no inertial navigation system or other navigation system.

Yet another object of the present invention is to provide a navigation system that requires no additional hardware beyond the existing hardware on board the aircraft.

Another object of the present invention is to provide a navigation system that works off of data already available in the aircraft system.

A further object of the invention is to provide a means to recover the global scale factor for the optical flow velocity equation using a secondary sensor.

BRIEF DESCRIPTION OF THE DRAWINGS

Other objects and many of the attendant advantages of the present invention will be readily apparent as the invention becomes better understood by reference to the following detailed description with the appended claims, when considered in conjunction with the accompanying drawings, wherein:

FIG. 1 is a functional block diagram of the passive navigation system according to the present invention, which includes the following items:

1 the image sensor;
2 gimbal platform on which the image sensor is mounted;
3 optical flow processor;
4 secondary sensor;
5 coordinate transform processor;
6 scale factor resolution module;

7 velocity calculation module;
8 velocity integration module;
9 position calculation module.

FIG. 2 schematically defines the coordinate system in relation to the image sensor.
FIG. 3 is a functional block diagram of the passive navigation system using difference of optical flow, and includes the following items:

1 the image sensor;
2 gimbal platform on which the image sensor is mounted;
3 optical flow processor;
4 secondary sensor;
5 coordinate transform processor;
10 modified difference field processor;
11 data buffer to store the Z(x,y) values;
12 processor used to invert optical flow equation;
13 data buffer to store the velocity values in the imager coordinates;
14 aircraft navigation coordinate transform processor;
15 data buffer to store the velocity values in the aircraft navigation coordinates;
8 velocity integration module;
9 position calculation module.

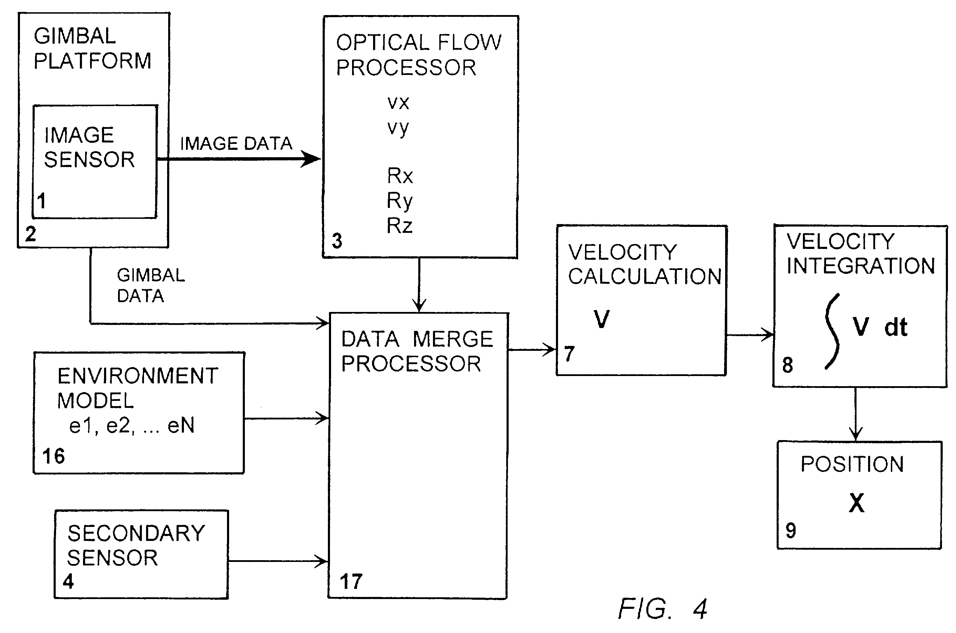

FIG. 4 is a functional block diagram of the passive navigation system using an environment model, and includes the following items:

1 the image sensor;
2 gimbal platform on which the image sensor is mounted;
3 optical flow processor;
4 secondary sensor;
16 environment model;
17 data merge processor;
7 velocity calculation module;
8 velocity integration module;
9 position calculation module.

PRIOR STATE OF THE ART

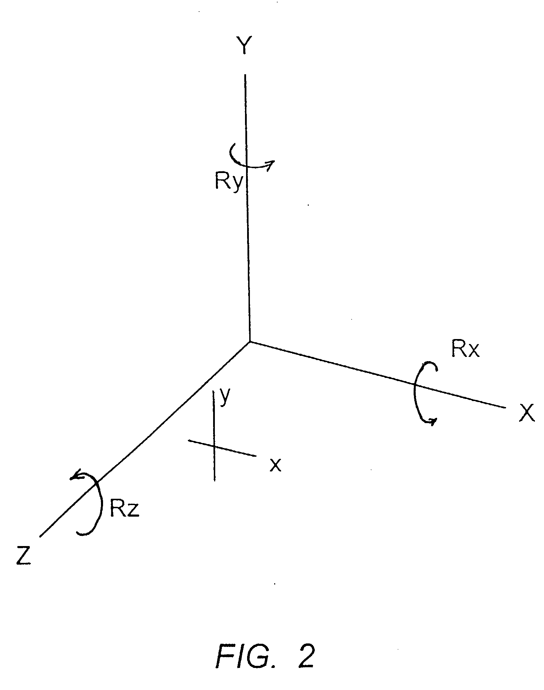

It is well known that the motion of an image sensor in the scene environment will produce an apparent motion of the elements of the scene on the focal plane. This motion is referred to as optical flow and it is analytically predictable from the motion of the imager $\mathbf{V}$, the structure of the environment, and the imager characteristics. Referring now to FIG. 2 we define the coordinate system with origin at the imager focal plane, the positive Z axis defines the line of sight (LOS) of the imager, the positive X axis points left when viewed from the focal plane and the positive Y axis points up to form a right handed coordinate system. In this coordinate system the scene environment is described by points which have their position vector $\mathbf{X}$ [ X Y Z ]. The corresponding projection of a point at $\mathbf{X}$ in environment space has coordinates $\mathbf{x}$ [ x y ] on the focal plane where the x and y values of a point at (X,Y,Z) are given by projection

$$x = (f / Z) X \qquad y = (f / Z) Y$$

where f is the focal length of the sensor.
The imager velocity is defined by the translation vector $\mathbf{V}$ [ Vx Vy Vz ] and the angular velocity vector $\mathbf{R}$ [ Rx Ry Rz ]. The velocity $\mathbf{V}$ will define an optical flow on the focal plane as $\mathbf{v}$ = [ vx vy ] given by the formula

$$vx = (1 / Z) ((x * Vz) - Vx) + (x * y * Rx - (1 + x^2)$$

$$* Ry + y * Rz )$$

$$vy = (1 / Z) ((y * Vz) - Vy) + ((1 + y^2) * Rx - x * y$$

$$* Ry - x * Rz )$$

where x and y are scaled by the focal length f, which we assume to be f = 1 for this discussion.
In a more general form the above equations can be written as

$$v(x,y) = [ 1 / Z(x,y) ] [ T(x,y) ] * V + [ r(x,y) ] * R$$

where [ T ] and [ r ] are translation and rotation matrices.

$$
T \quad = \quad \begin{vmatrix} -1 & 0 & x \\ 0 & -1 & y \end{vmatrix}
$$

$$
r \quad = \quad \begin{vmatrix} x * y & -(1+x^2) & y \\ 1 + y^2 & -x * y & -x \end{vmatrix}
$$

The prior state of the art (Reference 1) uses two imagers in the following way to calculate the velocity **V**. (Reference 2, published in 1992, indicates that the problem of a global scale factor is still in the prior state of the art.) If the two cameras are at some instant in time nearly coincident, the translation matrix [ T ] and the rotation matrix [ r ] will nearly identical for both cameras. Proceeding in time from that instant the two cameras move each with their own velocity **V1** and **V2** and rotational velocity **R1** and **R2**. The difference in velocity between the two cameras is known and indeed controlled by the system, for example by moving the second camera along a sliding frame at a known rate. For each camera therefore there is a velocity flow field **v1** and **v2**. The difference in velocities of the two cameras is **dV** and **dR** where

$$dV = V2 - V1 \qquad and \qquad dR = R2 - R1$$

The difference of the two velocity fields **dv** = **v2** - **v1** is given by the same equation as above

$$dv(x,y) = [ 1 / Z(x,y) ] [ T(x,y) ] * dV + [ r(x,y) ]$$

$$* dR$$

Since the angular velocity components of the optical flow are independent of the distance Z, we define the modified difference flow **dw**(x,y)

$$dw(x,y) = dv(x,y) - [ r(x,y) ] * dR$$

$$= [1 / Z(x,y) ] [ T(x,y) ] * dV$$

Now we define the focus of expansion of the modified flow field, (x_foe, y_foe)

$$x\_foe = dVx / dVz \qquad y\_foe = dVy / dVz$$

and then we can rewrite **dw**(x,y) in terms

$$dwx = [1 / Z(x,y)] \, dVz \, ( x - x\_foe )$$

$$dwy = [1 / Z(x,y)] \, dVz \, ( y - y\_foe )$$

defining

$$dwr(x,y) = [ \, (dwx(x,y))^2 + (dwy(x,y))^2 \, ]^{\frac{1}{2}}$$

we can solve the above equation for the absolute distance Z as

$$Z(x,y) = [ \, dVz / dwr(x,y) \, ] \, [ \, ( x - x\_foe \, )^2$$

$$+ \, ( y - y\_foe \, )^2 \, ]^{\frac{1}{2}}$$

With this method the absolute scale factor relative to Z can be calculated at each (x,y), then the Z value is inserted in the equation for optical flow and the equation can be inverted and solved for **V**.

NEW SOLUTION PROPOSED

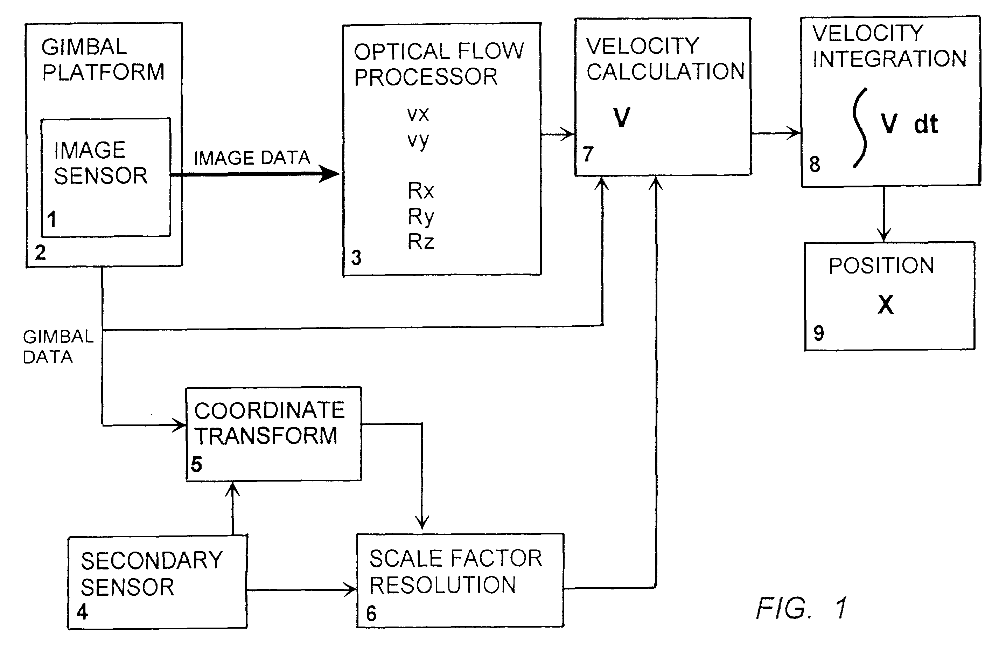

The primary objective of the passive image sensor navigation system according to the present invention which is functionally diagrammed in FIG. 1 is to provide position information for aircraft which carry passive imagers. This primary object is implemented by taking time sequential image frames from the image sensor **1** and imager orientation information from the gimbaled platform on which it is mounted **2** and processing the data in order to derive the motion of the image (its optical flow) on the focal plane **3**. Data from the secondary sensor **4** is transformed to the coordinate system of the optical flow processor **5** and used to calculate the global scale factor **6**. The scale factor resolution and the optical flow data are used to calculate the aircraft velocity V in the velocity calculation module **7**. The aircraft velocity is then integrated over time **8** to provide the displacement X **9** from the original position X0.

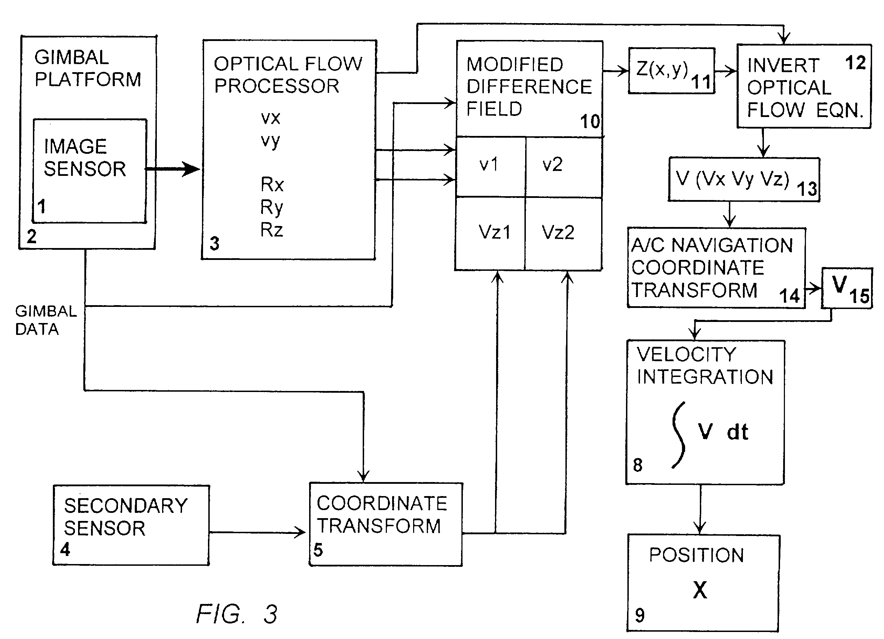

Referring now to FIG. 3 which functionally diagrams the new solution of time-delayed modified difference field, which is an advance in the state of the art in the following way: Instead of using two cameras and a mechanical apparatus to create a known difference in velocities **dV**, the effect of having two cameras is produced by recording the velocity field **v1** at time **t1** and then letting the aircraft move to a new position at time t2. There are now two aircraft velocities, **V1** and **V2**, at times t1 and t2. These two aircraft velocities produce velocity flow fields **v1** and **v2** on the imager **1** which are calculated in the optical flow processor **3** and passed to the modified difference field processor **10**. Simultaneously the secondary sensor **4** measures or estimates the velocity of the aircraft in its own coordinate frame which is then passed to the coordinate transform processor **5** which converts the data to **V1** and **V2** in the suitable coordinate system; this velocity data is passed to the modified difference field processor **10**. The modified difference field processor **10** also receives the imager gimbal position data from the gimbal platform **2**. The modified difference field processor implements the equation listed above:

$$Z(x,y) = [ \, dVz / dwr(x,y) \, ] \, [ \, ( x - x\_foe \, )^2$$

$$+ \, ( y - y\_foe \, )^2 \, ]^{\frac{1}{2}}$$

in order to calculate the Z(x,y) values **11**. These Z(x,y) values are then passed to the invert optical flow equation processor **12** which uses the optical flow equation

$$v(x,y) = [ \, 1 / Z(x,y) \, ] \, [ \, T(x,y) \, ] * V + [ \, r(x,y) \, ] * R$$

where **V** is the only unknown quantity. Then the invert optical flow equation processor solves for **V**. Using many data pairs at positions (x1,y1), (x2,y2)...(xN,yN) allows numerical analysis methods to be used to reduce the error of the estimate of **V**. This **V 13** is then transformed to the suitable coordinate system by the aircraft navigation coordinate transform processor **14** in order to produce **V 15**, which as previously described is then integrated over time in the velocity integration processor **8** in order to calculate the position **X 9** relative to the initial point.

As an example to illustrate better the functioning of the invention, but not limited to only this example, we can suppose that the **dV** difference in velocities needed to solve the modified difference flow field equation can be provided by the aircraft autopilot subsystem. Typically an autopilot will provide orientation and acceleration information about the aircraft that is normally used to stabilize the flight path. The bias and drift errors are much too large for this velocity measurement to be useful over a long period of time in order to navigate. However, the accuracy over a short time period between t1 and t2 is sufficient to provide the **dV** data to the modified difference flow processor. This technique requires that the difference in velocity in the Z direction (dVz) be nonzero. This can be accomplished by maneuvering the aircraft and the gimbal between times t1 and t2. Notice also that this technique does not require any assumptions about the scene environment because Z is determined independently at each point (x,y) in image space.

Another technique of passive navigation that is part of this invention as illustrated in the functional block diagram in FIG. 4 is to combine the secondary sensor data with an assumption about the structure of the environment in order to resolve the ambiguity of the global scale factor that is contained in the optical flow field. Referring to FIG. 4 there is as presented previously the imager **1** mounted on a gimbal platform **2**. The image data from the imager is passed to the optical flow processor **3** which calculates the optical flow field at points in the image plane **v**(x,y). At the same time the secondary sensor **4** senses data about the aircraft or its environment. There is incorporated in the invention an environment model **16** that describes some assumptions about the structure of the scene environment. These assumptions are used in the data merge processor **17** which also receives data from the secondary sensor **4**, the optical flow processor **3**, and the gimbal platform **2**. The data merge processor uses the optical flow data to solve for the aircraft velocity to within the ambiguity of the global scale factor, and then resolves the global scale factor using the data from the secondary sensor with the assumptions contained in the environment model in order to estimate or solve for **V 7**. Then as previously described **V** is then integrated over time in the velocity integration processor **8** in order to calculate the position **X 9** relative to the initial point.

In order to better illustrate the functioning of the invention there is presented an example that is illustrative but not exhaustive in the application of the invention. We take the assumption of an environment model of a plane described by the equation of a plane,

$$x/A + y/B + z/C = 1$$

where A, B, and C are respectively the X, Y, and Z axis intercepts of the plane. We define the relationship of the imager to the plane by the height H of the imager above the plane, and the angle of the LOS of the imager measured relative to the plane as d. Then the LOS is defined looking in the direction of the slope of the plane such that the height is measured in the YZ plane, and the X axis is parallel to the plane. Then taking a = 1/A, b = 1/B, c = 1/C we can rewrite the equation of the plane as

$$1/Z = (c + a * x + b * y)$$

The three environment parameters are (e1,e2,e3) = (a,b,c). Using the height H and the angle d, which is effectively the depression angle of the LOS from horizontal, we can write

$$c = 1 / (H / \sin d) \quad b = -1 / (H / \cos d) \quad a = 0$$

where the parameter a is defined equal to zero because the X axis does not intercept the plane. Now we take the optical flow equation presented previously,

$$v(x,y) = [ 1 / Z(x,y) ] [ T(x,y) ] * V + [ r(x,y) ] * R$$

and substitute the equation of the plane for ( 1/Z ) and write explicitly the transformation and rotation matrices [ T ] and [ r ]

$$vx = (c+a*x+b*y)*(Vz*x-Vx)+Rz*y+Rx*(x*y)-Ry*(1+x^2)$$

$$vy = (c+a*x+b*y)*(Vz*y-Vy)-Rz*x+Rx*(1+y^2)-Ry*(x*y)$$

Hence the optical flow is defined entirely by the aircraft motion and rotation vectors, **V** and **R**, and the environment parameters (a,b,c). For mathematical convenience we define two variables and then rewrite the optical flow equation

$$tanal = Vy/Vz \qquad tanbe = Vx/Vz$$

$$vx = (c+a*x+b*y)*Vz*(x-tanbe)+Rz*y+Rx*(x*y)-Ry*(1+x^2)$$

$$vy = (c+a*x+b*y)*Vz*(y-tanal)-Rz*x+Rx*(1+y^2)-Ry*(x*y)$$

This equation contains the unknown quantities of the environment (a,b,c), the unknown aircraft velocity (Vx,Vy,Vz) and the aircraft angular velocity (Rx,Ry,Rz). As a mathematical convenience the unknown (Vx,Vy,Vz) has been rewritten as (Vz, tanal, tanbe). At every position in the focal plane (x,y) there is an optical flow vector (vx,vy) that is measured by the optical flow processor **3**. The environment parameters (b,c) are determined as above by (H,d) and the parameter a is defined to be zero. The depression angle d can be measured from the gimbal platform data and the height H is unknown. This is an illustrative but not exhaustive example of what the secondary sensor **4** could be. In this case it is an altimeter that measures the actual height above ground, H, which is analogous to the distance from the plane. Thus there is a secondary data parameter that resolves the global scale factor in the optical flow equation.

Expanding the above equation we get for every point (i,j) with image plane coordinates (x,y) the equations

$$vx = (c+a*x_{ij}+b*y_{ij})*Vz*(x_{ij}-tanbe)+Rz*y_{ij}$$

$$+Rx*(x_{ij}*y_{ij})-Ry*(1+x_{ij}^2)$$

$$vy = (c+a*x_{ij}+b*y_{ij})*Vz*(y_{ij}-tanal)-Rz*x_{ij}$$

$$+Rx*(1+y_{ij}^2)-Ry*(x_{ij}*y_{ij})$$

Taking several points in the image plane ( i,j = 1,2 ... N ) and these equations with the unknown quantities (b, c, Vz, tanal, tanbe, Rx, Ry, Rz) (optionally the **R** parameters can be calculated from the gimbal platform data if the aircraft also has angular velocity sensors), where N is greater than or equal to the number of unknowns, the data merge processor **17** and the velocity calculation **7** can solve the equations. As an example, in order to reduce errors in the estimation, a numerical analysis technique such as minimum least square can be used to calculate **V**. Then as previously described **V** is then integrated over time in the velocity integration processor **8** in order to calculate the position **X 9** relative to the initial point.

ADVANTAGES PROVIDED BY THE INVENTION WITH RESPECT TO THE PRIOR STATE OF THE ART

This invention provides certain advantages with respect to the current state of the art because the necessity for a second imager has been removed. Consequently, the mechanical apparatus previously required in order to provide for a nonzero relative velocity is also eliminated.

Eliminating the second camera reduces the size, weight, power, and complexity of the passive navigation system. Noticing that the solution for Z(x,y) is proportional to dVz, another advantage of this invention over the current state of the art is that the accuracy of the solution is not limited by the relative velocity obtainable between the two cameras with a mechanical apparatus, since this is determined by the aircraft velocity and autopilot system.

This invention provides other advantages over the current state of the art in that it provides a method to integrate data already available to the aircraft platform in order to determine position without requiring either additional sensors or increased performance in the sensor systems installed.

References cited:

(1) Dynamic Stereo: Passive Ranging to Moving Objects from Relative Flow Fields, Allen M. Waxman, Sarvajit S. Sinha, IEEE Transactions on Pattern Analysis and Machine Intelligence, Vol. PAMI-8, No. 4, July 1986, pp. 406 - 412.
(2) Statistical Analysis of Inherent Ambiguities in Recovering 3-D Motion from a Noisy Flow Field, Gem-Sun Jason Young, Rama Chellappa, IEEE Transactions on Pattern Analysis and Machine Intelligence, Vol. PAMI-14, No. 10, October 1992, pp. 995 - 1013.

**Claims**

1. System of navigation for use in a mobile vehicle for providing vehicle guidance, based on optical flow determination, comprising an image sensor (1) carried on board of said vehicle and mounted on a gimbal platform (2), an optical flow processor (3) receiving image data from the image sensor (1), and a velocity calculation module (7) for calculating the velocity from the optical flow determined on the basis of the image data within a scale factor, characterized by a secondary sensor (4) for providing data indicative of any component of the vehicle velocity and means (6, 5, 10, 17) for calculating said scale factor on the basis of said data from said secondary sensor (4).

2. System according to claim 1, characterised by the fact that said system is adapted to combine said data supplied by said imaging sensor (1) and said data supplied by said secondary sensor or sensors (4) on board the vehicle.

3. System according to claim 2, characterised by the fact that said system is adapted to perform the combination of data to calculate the velocity vector of the vehicle and its three components with respect to a reference system rigidly fixed in the external environment.

4. System according to claim 3, characterised in that said system is adapted to calculate the velocity vector by the steps of

   - retaining in memory data from said imaging sensor (1) and/or other data calculated from the image data, which data are acquired from said imaging sensor (1) at two different periods in time,
   - combining said data with data supplied by said secondary sensor or sensors (4) on board the vehicle,
   - combining said data in such a way as to determine the distance from the sensor (1) to points in the environment and therefore determine said velocity vector of the vehicle.

5. System according to anyone of the preceding claims, characterised in that an output of said secondary sensor (4) is connected to a coordinate transform processor (5) that receives gimbal data from the imaging sensor (1).

6. System according to claim 5, characterised in that the output ot the coordinate transform processor (5) is connected to a modified difference field processor (10).

7. System according to claim 5, characterised in that a further output of the secondary sensor (4) is connected to a scale factor resolution module (6) receiving data from the coordinate transform processor (5), the output of the scale factor resolution module (6) being connected to the velocity calculation module (7).

8. System according to anyone of the preceding claims, characterised by a data merge processor (17) receiving the gimbal data and data from the optical flow processor (3), from the secondary sensor (4) and from an environment model (16), the output of said data merge processor (17) being connected to said velocity calculation module (7).

9. System according to anyone of the preceding claims, characterised by a velocity integration module (8) the output of which is connected to a position calculation module (9) whereas the input receives data from said velocity calculation module (7) or from the modified difference field processor (10) respectively.

**Patentansprüche**

1.  Navigationssystem zur Verwendung in einem beweglichen Träger für dessen auf optischer Flußbestimmung beruhender Führung, umfassend einen auf einem kardanisch aufgehängten Tisch (2) gelagerten Bildsensor (1) an Bord des Trägers, einen Lichtstromprozessor (3), der von dem Bildsensor (1) Bilddaten erhält, und ein Geschwindigkeitsbestimmungsmodul (7) zur Berechnung der Geschwindigkeit aus dem Lichtstrom auf der Basis der Bilddaten innerhalb eines Skalierfaktors, gekennzeichnet durch einen Sekundärsensor (4) zur Beschaffung von Daten über beliebige Komponenten der Geschwindigkeit des Trägers sowie durch Mittel (6, 5, 10, 17) zur Berechnung des Skalierfaktors auf der Basis der von dem Sekundärsensor (4) gelieferten Daten.

2.  Navigationssystem nach Anspruch 1, dadurch gekennzeichnet, daß das System so ausgelegt ist, daß es die von dem Bildsensor (1) gelieferten Daten und die von dem Sekundärsensor oder den Sekundärsensoren (4) gelieferten Daten an Bord des Trägers miteinander kombiniert.

3.  Navigationssystem nach Anspruch 2, dadurch gekennzeichnet, daß das System so ausgelegt ist, daß es die Kombination von Daten für die Berechnung des Geschwindigkeitsvektors des Trägers und ihrer drei Komponenten bezüglich eines fest in der äußeren Umgebung angebrachten Referenzsystems durchführt.

4.  Navigationssystem nach Anspruch 3, dadurch gekennzeichnet, daß das System so ausgelegt ist, daß es den Geschwindigkeitsvektor in den folgenden Schritten bestimmt:

    -   Speichern der vom Bildsensor (1) gelieferten Daten und/oder anderer Daten, die aus den Bilddaten berechnet werden, wobei die Daten von dem Bildsensor (1) in zwei unterschiedlichen Zeitperioden erhalten werden,
    -   Kombinieren der Daten mit von dem Sekundärsensor bzw. den Sekundärsensoren (4) an Bord des Trägers gelieferten Daten,
    -   Kombinieren dieser Daten derart, daß der Abstand zwischen dem Sensor (1) und Punkten in der Umgebung und damit der Geschwindigkeitsvektor des Trägers bestimmt werden.

5.  Navigationssystem nach einem der vorhergehenden Ansprüche, dadurch gekennzeichnet, daß ein Ausgang des Sekundärsensors (4) mit einem Koordinatenumwandlungs-Prozessor (5) verbunden ist, der von dem Bildsensor (1) kardanische Daten erhält.

6.  Navigationssystem nach Anspruch 5, dadurch gekennzeichnet, daß der Ausgang des Koordinatenumwandlungs-Prozessors (5) mit einem Prozessor (10) für ein modifiertes Differenzfeld verbunden ist.

7.  Navigationssystem nach Anspruch 5, dadurch gekennzeichnet, daß ein weiterer Ausgang des Sekundärprozessors (4) mit einem Modul (6) für die Auflösung des Skalierfaktors verbunden ist, der Daten von dem Koordinatenumwandlungs-Prozessor (5) erhält und dessen Ausgang mit dem Geschwindigkeitsbestimmungsmodul (7) verbunden ist.

8.  Navigationssystem nach einem der vorhergehenden Ansprüche, gekennzeichnet durch einen Prozessor (17) zum Zusammenführen von Daten, welcher die kardanischen Daten sowie die Daten von dem Lichtstromprozessor (3), von dem Sekundärsensor (4) und von einem Umgebungsmodell (16) erhält, wobei der Ausgang des Prozessors (17) zum Zusammenführen von Daten mit dem Geschwindigkeitsbestimmungsmodul (7) verbunden ist.

9.  Navigationssystem nach einem der vorhergehenden Ansprüche, gekennzeichnet durch ein Modul (8) für die Geschwindigkeitsintegration, dessen Ausgang an ein Positionsberechnungsmodul (9) angeschlossen ist, während dessen Eingang Daten von dem Geschwindigkeitsbestimmungsmodul (7) bzw. von dem Prozessor (10) für ein modifiziertes Differenzfeld erhält.

**Revendications**

1.  Système de navigation pour utilisation dans un véhicule mobile pour fournir le guidage du véhicule, basé sur la détermination du flux optique, comprenant un capteur d'images (1) embarqué sur ledit véhicule et monté sur une plate-forme suspendue à la Cardan (2), un processeur de flux optique (3) recevant les données d'image provenant du capteur d'images (1), et un module de calcul de vitesse (7) pour calculer la vitesse à partir du flux optique déterminé sur la base des données d'image à l'intérieur d'un facteur d'échelle, caractérisé par un capteur secondaire (4) pour fournir des données de mesure de n'importe quelle composante de la vitesse du véhicule et des moyens (6, 5, 10, 17) pour calculer ledit facteur d'échelle sur la base desdites données provenant dudit capteur secondaire (4).

2. Système selon la revendication 1, caractérisé par le fait que ledit système est adapté pour combiner lesdites données fournies par ledit capteur d'images (1) et lesdites données fournies par le ou lesdits capteurs secondaires (4) à bord du véhicule.

3. Système selon la revendication 2, caractérisé par le fait que ledit système est adapté pour réaliser la combinaison des données pour calculer le vecteur vitesse du véhicule et ses trois composantes par rapport à un système de référence rigidement fixé dans l'environnement externe.

4. Système selon la revendication 3, caractérisé en ce que ledit système est adapté pour calculer le vecteur vitesse par les étapes de :

   - mémoriser les données provenant dudit capteur d'images (1) et/ou d'autres données calculées à partir des données d'image, lesdites données étant acquises à partir dudit capteur d'images (1) à deux instants différents,
   - combiner lesdites données avec les données fournies par ledit ou lesdits capteurs secondaires (4) à bord du véhicule,
   - combiner lesdites données de façon à déterminer la distance depuis le capteur (1) jusqu'à des points dans l'environnement et pour déterminer ainsi ledit vecteur vitesse du véhicule.

5. Système selon l'une quelconque des revendications précédentes, caractérisé en ce qu'une sortie dudit capteur secondaire (4) est connectée à un processeur de transformation de coordonnées (5) qui reçoit les données de la suspension à la Cardan provenant du capteur d'images (1).

6. Système selon la revendication 5, caractérisé en ce que la sortie du processeur de transformation de coordonnées (5) est connectée à un processeur de champ différentiel modifié (10).

7. Système selon la revendication 5, caractérisé en ce qu'une sortie supplémentaire du capteur secondaire (4) est connectée à un module de résolution de facteur d'échelle (6) recevant les données provenant du processeur de transformation de coordonnées (5), la sortie du module de résolution de facteur d'échelle (6) étant connectée au module de calcul de vitesse (7).

8. Système selon l'une quelconque des revendications précédentes, caractérisé par un processeur de fusion de données (17) recevant les données de la suspension à la cardan et les données du processeur de flux optique (3), à partir du capteur secondaire (4) et à partir d'un modèle d'environnement (16), la sortie dudit processeur de fusion de données (17) étant connectée audit module de calcul de vitesse (7).

9. Système selon l'une quelconque des revendications précédentes, caractérisé par un module d'intégration de vitesse (8) dont la sortie est connectée à un module de calcul de position (9) tandis que son entrée reçoit les données provenant du module de calcul de vitesse (7) ou provenant du processeur de champ différentiel modifié (10) respectivement.

FIG. 1

EP 0 631 109 B1

FIG. 2

FIG. 3

EP 0 631 109 B1

FIG. 4

EP 0 631 109 B1